Europäisches Patentamt

European Patent Office

Office européen des brevets

(11) Numéro de publication: **0 373 991**
**A1**

## (12) DEMANDE DE BREVET EUROPEEN

(21) Numéro de dépôt: 89403270.5

(51) Int. Cl.5: **E06B 3/06**

(22) Date de dépôt: **27.11.89**

(30) Priorité: **12.12.88 FR 8816320**

(43) Date de publication de la demande:
**20.06.90 Bulletin 90/25**

(84) Etats contractants désignés:
**AT BE CH DE ES FR GB GR IT LI LU NL SE**

(71) Demandeur: **FERCO INTERNATIONAL Usine de Ferrures de Bâtiment Société à responsabilité limitée dite**
**2, rue du Vieux-Moulin Reding**
**F-57400 Sarrebourg(FR)**

(72) Inventeur: **Kautt, Jean-Jacques**
**24 rue Pertois**
**F-67000 Strasbourg(FR)**

(74) Mandataire: **Rodhain, Claude et al**
**Cabinet Claude Rodhain 30, rue la Boétie**
**F-75008 Paris(FR)**

(54) Installation pour la finition de vantaux.

(57) Installation comprend:
- des moyens d'introduction et de fixation (24) des ferrures dans la rainure ménagée dans le montant du vantail,
- des moyens pour la pose du joint extérieur, ouvrant/dormant, dans la saignée périphérique du cadre (23) du vantail,
- des moyens pour la pose du joint de fond de vitrage sur l'épaulement périphérique dudit cadre,
- des moyens pour la pose et le calage des vitres (54) sur le joint de vitrage,
- des moyens pour la pose du joint de parclose.

FIG.3

## "INSTALLATION POUR LA FINITION DE VANTAUX".

L'invention concerne une installation pour la finition de vantaux c'est-à-dire pour la fixation sur un cadre nu, formé de façon usuelle de montants et de traverses assemblées, des ferrures, joints d'étanchéité, vitres, parcloses et autres accessoires tels que jet d'eau ou autres transformant le simple cadre en un vantail prêt à être monté sur le dormant d'une fenêtre ou d'une porte-fenêtre.

Les cadres de vantaux sont généralement réalisés en bois ou en matière plastique ou en aluminium, et comportent venus d'usinage ou de moulage, les logements propres à recevoir les ferrures, joints et vitres propres à constituer un vantail. C'est ainsi que la périphérie ou la face avant du montant du vantail comporte une rainure pour le logement des ferrures constituée, dans le cas de vantaux s'ouvrant à la française, d'une crémone avec train et boîtier et têtière. Ces mêmes cadres comportent également une saignée périphérique dans laquelle est partiellement introduit le joint extérieur assurant l'étanchéité entre l'ouvrant et le dormant et un épaulement interne également périphérique destiné à recevoir le bord extérieur de la vitre après interposition de joints inférieur et supérieur, le tout étant immobilisé par une parclose fixée dans le cadre.

Ces diverses opérations sont jusqu'alors effectuées manuellement à des postes séparés, ce qui entraîne des coûts de production élevés du fait des temps de fabrication inhérents au caractère manuel de l'exécution des opérations. En outre, la finition reste bien évidemment liée à la dextérité et à la conscience professionnelle de l'opérateur, ce qui peut par conséquent entraîner des variations préjudiciables dans la qualité du travail. En outre, toute modification intervenant sur ce type de fabrication traditionnelle en ligne :
- augmente le nombre de postes de travail lorsqu'un accessoire ou une modification vient affecter un type d'ouvrant,
- présente des temps morts ou temps d'arrêt, principalement lors de changement de types de produits. Par la nécessité de mise en concordance des approvisionnements, des gabarits de travail etc...,
- au pire des cas, modification des implantations des postes de travail lorsqu'il y a implantation de modèles différents où des tâches plus nombreuses seraient à exécuter.

L'invention a pour but de remédier à ces inconvénients et a pour objet une installation pour la finition de vantaux, la plus automatisée possible de manière à réduire, autant que faire se peut, les opérations et manipulations manuelles grévant les coûts de production.

Ce but est atteint avec une installation formée d'une chaîne continue de postes modulaires pour l'équipement automatique des vantaux.

De préférence, ces postes sont disposés selon un plan de référence sensiblement linéaire.

Et selon un agencement préféré, l'installation comprend :
- des moyens d'introduction et de fixation des ferrures dans la rainure ménagée sur la périphérie ou dans la face avant du montant du vantail,
- des moyens pour la pose du joint extérieur, ouvrant/dormant, dans la saignée périphérique du cadre du vantail,
- des moyens pour la pose du joint de fond de vitrage sur l'épaulement périphérique interne dudit cadre,
- des moyens pour la pose et le calage des vitres sur le joint de fond de vitrage,
- des moyens pour la pose du joint de parclose sur la périphérie de la vitre (lorsque le joint est indépendant de la parclose),
- des moyens pour la pose, le pressage, et la fixation des parcloses, avec ou sans joint intégré.

Pour parfaire l'automaticité de l'installation, chaque poste de travail comporte un convoyeur situé dans l'alignement du convoyeur du poste adjacent, des organes de transbordement assurant le passage des vantaux d'un poste à un autre sans transition.

L'installation selon l'invention permet ainsi, grâce à une exécution automatisée des différentes opérations, de supprimer pratiquement les opérateurs et de réaliser de façon continue, l'équipement des vantaux depuis les cadres nus jusqu'au vantail prêt à être posé sur le dormant. En outre, les opérations de manipulation manuelles sont supprimées, ce qui évite les temps morts, tout en permettant d'obtenir une parfaite régularité dans la qualité de la finition.

D'autres caractéristiques et avantages ressortiront de la description ci-après et des dessins annexés dans lesquels :
- les figures 1A à 1F sont des sections d'un des montants du vantail illustrant l'équipement progressif du cadre nu depuis le premier poste de travail à la sortie du vantail terminé et prêt à l'emploi,
- la figure 2 est une élévation de l'installation conforme à l'invention,
- la figure 3 est une vue de dessus de la figure 1.

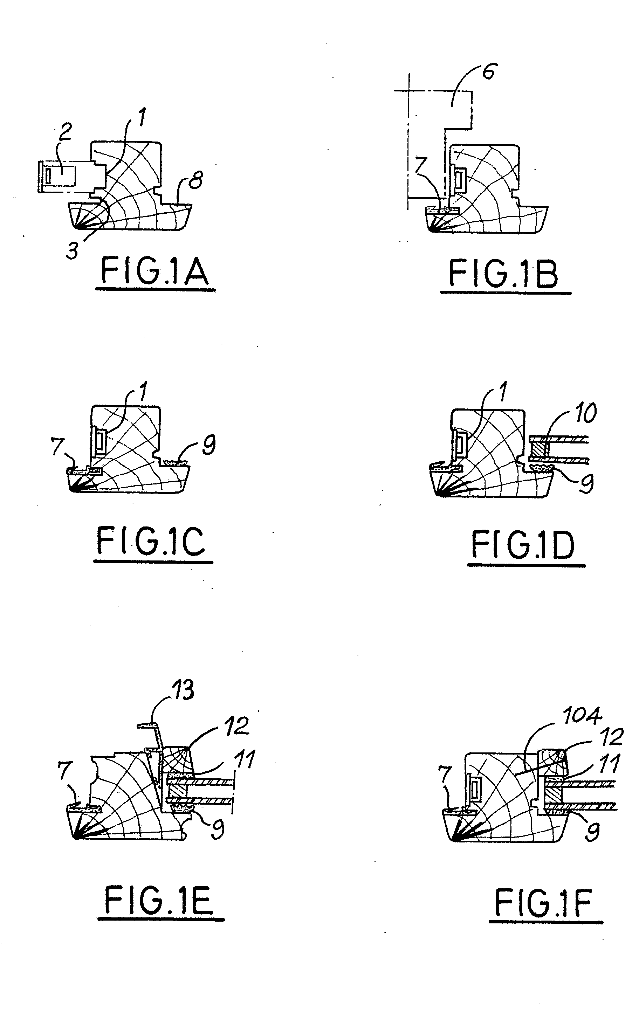

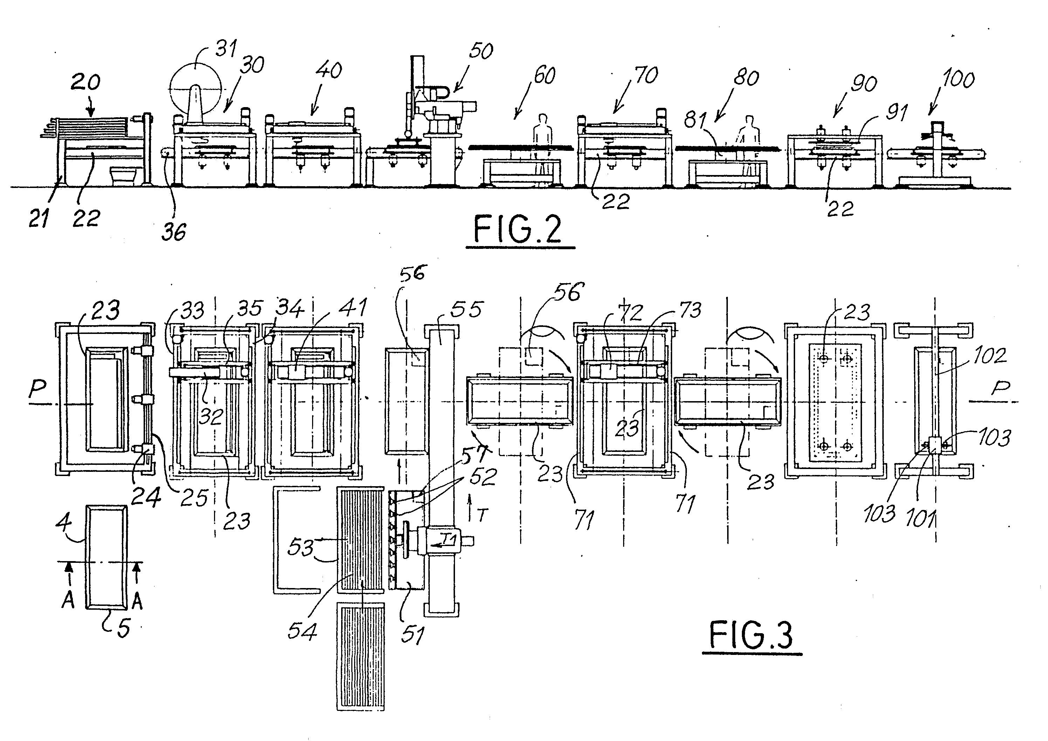

Comme illustré sur la figure 1A, le montant du vantail pris selon la ligne de coupe A-A de la figure 3 présente en section une rainure longitudinale 1, destinée à recevoir les ferrures 2, constituées de la crémone comprenant ses tringles, boîtiers et têtières. S'il s'agit d'un ouvrant à la française, c'est-à-dire pivotant sur un seul axe vertical, cette rainure 1 est prévue sur la seule face avant du montant du vantail puisque dans ce cas les ferrures ne s'étendent que sur un côté de l'ouvrant. S'il s'agit d'ouvrant oscillo-battant, la rainure 1 sera de type périmétral pour recevoir les ferrures comprenant les tringles, les renvois d'angles et les têtières usuellement employées.

Sous la rainure 1 est prévue une saignée 3 qui fait le tour du cadre, c'est-à-dire qui s'étend à la fois sur les montants et sur les traverses 4 et 5 visibles en figure 3. Cette saignée est destinée à recevoir partiellement l'une des lèvres du joint extérieur 7 assurant l'étanchéité entre le dormant et l'ouvrant. Cet ouvrant est schématiquement illustré en 6 sur la figure 1B où l'on observe que le joint d'étanchéité vient en recouvrement sur le dormant 6.

Sur cette même figure 1A apparaît l'épaulement périphérique interne 8 du cadre destiné à recevoir successivement le joint de fond de vitrage 9 (figure 1D) le bord extérieur 10 de la vitre, puis le joint de parclose 11 et la parclose proprement dite 12 (figure 1E).

Le cadre nu ainsi structuré arrive, après reconnaissance (dimensions, matière, types, mode d'ouverture), au premier poste de travail 20 où s'effectuent la pose et la fixation des ferrures 2 dans la rainure 1. Ce poste comporte un châssis 21 supportant une table élévatrice 22 amenée de façon usuelle à niveau par des vérins verticaux, cette table étant alimentée par un cadre nu 23 (figure 3). Les organes d'introduction et de fixation des ferrures sont constitués d'organes de poussée et de vissage 24 montés sur une glissière 25 parallèle au montant du cadre, ces organes 24 étant fixés en regard de la face avant du montant notamment dans le plan de la rainure 1. Les moyens de reconnaissance sont avantageusement constitués de taquets de gabarit, de détecteurs de proximité ou de tous autres accessoires connus du commerce tels que cellules.

Le second poste 30 est également constitué d'un bâti et d'une table élévatrice similaires à ceux du poste 20 mais comporte en plus une bobine de dévidage du joint extérieur 31 et un chariot 32 mobile en translation sur deux glissières 33, 34 et se déplaçant dans le plan longitudinal du cadre 23, ce chariot débitant à longueur le joint extérieur et l'appliquant en force, par des moyens de guidage mécaniques, pneumatiques ou hydrauliques, dans la saignée 3 du cadre visible en figure 1. Bien entendu, le chariot 32 est monté rotatif sur son porte-chariot 35 pour pouvoir suivre toute la périphérie du cadre. Le transfert du vantail du poste 20 au poste 30 est réalisé par convoyeur, chaque poste comportant une chaîne ou un tapis d'entraînement 36, des moyens de transbordement non représentés mais connus en soi assurant le passage des vantaux d'un poste à un autre sans transition. Ces moyens de transbordement peuvent être avantageusement constitués d'un ou plusieurs rouleaux fous placés dans l'interstice existant entre deux postes successifs. Le poste 40 est destiné à la pose du joint de fond de vitrage 9 (figure 1D). A l'instar du poste 30 cette unité comporte un chariot 41 mobile en translation et en rotation, ce chariot débitant à longueur le joint de fond de vitrage et l'appliquant par des organes de guidage et de pression sur l'épaulement périphérique 8 du cadre. S'il s'agit de joint collé, la simple application sous pression légère du joint suffit à le positionner et à le fixer rigoureusement le long de l'arête de l'épaulement interne du cadre. Bien entendu, ce poste comporte là encore une table élévatrice similaire à celles des postes 20 et 30 ainsi qu'un convoyeur permettant d'acheminer le vantail à un poste subséquent.

Le poste 50, plus visible en figure 3, comporte une alimentation transversale au plan de référence P-P d'avancement de la chaîne. Cette unité comporte une table de repositionnement horizonale 51 ainsi que des moyens de préhension 52 tels que des têtes de succion reliées à une pompe à vide, ces moyens de préhension étant animés par deux séquences distinctes dont les mouvements respectifs concernent, un mouvement vertical pour saisir, entraîner, puis décoller la vitre, un mouvement de translation latéral T1 pour amener la vitre au-dessus de la table de repositionnement horizontale 51, un mouvement rotatif pour faire passer la vitre du plan vertical au plan horizontal au-dessus de la table de repositionnement, un mouvement de dépose de la vitre sur cette dernière qui permet de désolidariser les moyens de préhension 52 de la vitre ; pour la seconde séquence, un mouvement de bascule de la table de repositionnement 51 pour le calage de la vitre dan l'un des angles de cette table, suivi de mouvements de reprise de la vitre par les moyens de préhension 52 et de positionnement de la vitre dans le vantail nu, sur la ligne de finition dans le plan P-P. Dans le détail, les moyens de préhension sont des têtes de succion déplacées par des moyens électriques en direction du magasin 53, dans lequel sont stockées, dans un ordre hiérarchisé, les vitres 54 qui peuvent être de tailles ou d'épaisseurs différentes selon le type de vantail à réaliser. Les vitres sont légèrement inclinées de manière à assurer une auto-stabilisation et les têtes de succion 52 en se déplaçant suivant la flèche T1, viennent en contact de la première vitre de l'empilage et la déplacent en la faisant glisser, selon leur plan d'inclinaison par rapport aux autres vitres, avant de la décoller dans un plan vertical. Lorsque la vitre est décollée, la tête reprend un déplacement inverse à T1 pour la positionner au-dessus de la table de repositionnement 51. Cette table est constituée d'un lit fluide créé par un matelas d'air, afin de repositionner la vitre selon des références identiques aux épaulements internes du vantail nu sur la ligne de finition par rapport au plan P-P. Ce repositionnement est nécessaire pour la suite des opérations que l'on décrira plus tard. A cet effet, une seule référence a été prise en compte et il s'agit de l'angle interne supérieur droit 56 de l'épaulement du vantail. Ce repère est repris automatiquement en 57 sur la table de repositionnement 51. Aussi, les mouvements des moyens de préhension 52 sont les suivants : un mouvement rotatif pour passer la vitre du plan vertical sur un plan horizontal parallèle au plan de la table de repositionnement, suivi d'un mouvement de dépose et de retirement des moyens de préhension de la vitre. La table de repositionnement adopte dès lors un mouvement de bascule pour positionner l'angle externe supérieur droit 57 de la vitre contre le repère. Dès que les contacts sont pris et après l'immobilisation de la table, les têtes de succion reviennent saisir le vitrage et suivront la flèche T pour amener la vitre dans le plan de référence P-P de la ligne de finition. A ce stade, la dépose de la vitre se fait avec la coïncidence des angles respectifs de l'épaulement interne 56 du vantail et du bord extérieur de la vitre.

Après mise en place de la vitre, le vantail est acheminé au poste 60 où s'effectuera le calage des vitres. Il est important de procéder à cette opération en raison du jeu qui existe entre le bord périphérique de la vitre et le fond de l'épaulement 8 du cadre. De même, le voilage du cadre pourrait entraîner des bris de glace, et il est donc nécessaire de caler la vitre sur deux de ses angles diagonalement opposés de manière à obtenir une répartition régulière du jeu entre vitre et cadre. Ce calage s'effectue à l'aide de petites cales en bois insérées dans le couloir périphérique subsistant entre le bord externe de la vitre et le fond de l'épaulement du cadre. On remarque sur la figure 3 que, pour favoriser cette opération manuelle, le vantail a été pivoté de 90° afin que l'opérateur puisse avoir accès aux deux côtés du cadre sans avoir à contourner l'ensemble de l'installation. En effet, les convoyeurs, situés à chaque poste, lui interdisent tout franchissement transversal de sorte que si le vantail restait dans la position illustrée aux postes 20, 30 ou 40, il y aurait là un temps mort important dû au déplacement de l'opérateur. Le poste 60 comporte donc une table rotative assurant le pivotement des vantaux.

Lorsque la vitre est correctement calée, on assure son transbordement vers le poste 70 où s'effectue la pose du joint de parclose 11 (figure 1E). Ce poste, à l'instar des précédents, comporte une table élévatrice supportée par un bâti muni de deux glissières 71, parallèles au montant du cadre 23, ces glissières servant de chemin de guidage au chariot 72, monté mobile en translation alternative, et pouvant par ailleurs pivoter sur son porte-chariot 73 afin de pouvoir suivre la périphérie du cadre 23. Le chariot débite à longueur le joint de parclose provenant d'une bobine et l'applique par des organes d'appui montés élastique sur le bord externe de la vitre 10, celle-ci pouvant être simple ou double. Le joint de fond de vitrage 9 et le joint de parclose 11 ont pour effet de prendre en sandwich le bord extérieur de la vitre et se trouvera ainsi immobilisé contre l'épaulement 8 du cadre (figure 1A) et la parclose 12 (figure 1E). Le joint de parclose 11 peut se présenter sous la forme d'un ruban souple extrudé et autocollant tout comme d'ailleurs le joint de fond de vitrage. Ce type de joint est, généralement, revêtu d'une pellicule collable que l'on extrait au fur et à mesure de la pose du joint. Il est également envisageable de poser directement sur la vitre une parclose 12 déjà équipée d'un joint par exemple autocollant. Dans cette hypothèse, le joint 11 qui a été déposé au poste 70 n'a évidemment plus de raison d'être. L'installation peut en outre comporter un poste annexe de pose de joint de parclose sur la parclose 12 ainsi que des moyens de pose d'autres accessoires tels que jet d'eau 13 (figure 1E) inséré entre la section du vantail nu et la parclose 12.

Le vantail muni de sa vitre, est ensuite acheminé du poste 70 au poste 80 où s'effectue la pose des parcloses 12 (figure 1E). Là encore, pour des raisons de facilité de travail, la table 81 est montée rotative pour faire pivoter le vantail de 90° afin que l'opérateur puisse accéder aisément des deux côtés des montants du cadre 23. La parclose est placée dans la position illustrée en figure 1E, c'est-à-dire dans l'alignement du joint de parclose 11 si celui-ci est indépendant de ladite parclose. L'opération peut être réalisée en automatique par un système de distribution des parcloses coopérant avec des doigts de positionnement. Après positionnement des parcloses, le cadre est à nouveau pivoté de 90° pour revenir à sa position initiale et est acheminé au poste 90 où s'effectuera le pressage de l'ensemble parclose et joint. Bien entendu, le transfert d'un poste à un autre s'effectue toujours par des moyens de transbordement situés entre les deux convoyeurs successifs d'une unité de travail.

Le poste de pressage comporte là encore une table de mise à niveau sur laquelle est placé le vantail 23. Ce poste comporte par ailleurs un plateau de pression 91 soumis à l'action de vérins et venant prendre appui sur les parcloses afin d'assurer la compression des joints ainsi que la parfaite linéarité du vantail. Dans certains cas et s'agissant de joints souples et malléables, il est parfois envisagé d'utiliser des couteaux assurant l'extraction du reliquat de joint qui aurait pu affluer de part et d'autre de la vitre.

Après cette opération, il suffit d'amener le vantail au poste 100 pour réaliser, là encore, en automatique, le clouage des parcloses comme visible en figure 1F. Ce poste comprend des têtes 101, munies de cloueuses, montées mobiles en translation sur une glissière 102, ces têtes comportant des ventouses pneumatiques 103 éjectant sous pression les clous 104 (figure 1F) traversant la parclose et pénétrant dans la section du cadre.

On réalise ainsi, en continu et pratiquement sans aucune intervention manuelle, l'équipement des vantaux depuis le cadre nu jusqu'à la finition du vantail prêt à l'emploi en passant par la pose des ferrures, pose des joints, de la vitre et des parcloses. Par son automatisme et les moyens spécifiques qu'elle réunit, cette installation permet de multiplier par 10 voire par 100 la productivité tout en permettant d'obtenir une excellente régularité dans la finition du travail.

Bien entendu, l'invention n'est pas limitée à la nature des divers moyens ci-dessus décrits car ceux-ci ne constituent qu'un mode de réalisation préférentiel, d'autres moyens du commerce pouvant être adoptés, qu'il s'agisse des organes de fixation, de préhension, de pose ou d'avance, sans rien changer au concept de l'invention dont l'originalité repose sur la flexibilité qu'elle permet en raison de ses moyens propres à s'adapter à tout type d'ouvrant et ce, en évitant avantageusement tout temps d'arrêt de production.

## Revendications

1 - Installation pour la finition de vantaux constituée d'un cadre nu formé de montants et de traverses assemblés, chaque cadre comportant des rainure, saignée et épaulement prêts à recevoir respectivement les ferrures, joint d'étanchéité ouvrant/dormant, joint de fond de vitrage, vitrage, joint de parclose et parclose, installation caractérisée en ce qu'elle est formée d'une chaîne continue de postes modulaires pour l'équipement automatique des vantaux.

2 - Installation selon la revendication 1 caractérisée en ce qu'elle comprend :
- des moyens d'introduction et de fixation (24, 25) des ferrures (2) dans la rainure (1) ménagée dans le montant du vantail,
- des moyens (31,32, 33, 34, 35) pour la pose du joint extérieur (7), ouvrant/dormant, dans la saignée périphérique (3) du cadre du vantail (23),
- des moyens (40, 41) pour la pose du joint de fond de vitrage sur l'épaulement périphérique (8) dudit cadre,
- des moyens (50, 60) pour la pose et le calage des vitres (10) sur le joint de vitrage (9),
- des moyens pour la pose du joint de parclose (11) sur la périphérie de la vitre (10), lorsque le joint est indépendant de la parclose,
- des moyens (80, 90, 100) pour la pose, le pressage et la fixation des parcloses.

3 - Installation selon la revendication 1, caractérisée en ce qu'elle comprend des moyens de reconnaissance (taquets de gabarit, détecteur de proximité, cellules) du dimensionnement, de la matière et du type de vantail à équiper.

4 - Installation selon la revendication 1, caractérisée en ce qu'elle est formée d'une chaîne continue de postes modulaires disposés selon un plan de référence P-P sensiblement linéaire.

5 - Installation selon la revendication 2, caractérisée en ce que les moyens de pose des ferrures sont constitués d'organes de poussée (24) fixés sur une glissière (25) parallèle au montant du cadre (23) comportant la rainure (1) destinée à recevoir lesdites ferrures.

6 - Installation selon la revendication 2, caractérisée en ce que les moyens pour la pose du joint d'étanchéité (7) sont constitués d'un chariot (32) monté sur des glissières (33, 34), celui-ci débitant le joint (7) à longueur et l'appliquant dans la saignée périphérique (3) du cadre par des organes d'appui de guidage.

7 - Installation selon la revendication 2, caractérisée en ce que les moyens de pose du joint de fond de vitrage (9) sont constitués d'un chariot (41) mobile sur glissières, celui-ci débitant le joint à longueur et l'appliquant sur l'épaulement périphérique interne (8) du cadre (23).

8 - Installation selon la revendication 2, caractérisée en ce que les moyens pour la pose de la vitre (10) comprennent une table de repositionnement (51) de la vitre, une tête de préhension munie de ventouses pneumatiques (52), cette tête étant montée mobile dans au moins trois plans, vertical, horizontal et rotatif, et étant coulissante sur une poutre glissière (55) pour alimenter transversalement la chaîne modulaire.

9 - Installation selon la revendication 2, caractérisée en ce que les moyens pour la pose du joint de parclose (11) sont constitués d'un chariot mobile (72) monté sur glissière et débitant à longueur ledit joint, ce chariot comportant des organes pour guider et appliquer ce joint sur le bord périphérique de la vitre.

10 - Installation selon la revendication 2, caractérisée en ce que les moyens pour la pose et le pressage de la parclose sont constitués d'une table rotative (81) et d'un plateau presseur (91) de type hydraulique ou pneumatique, celui-ci prenant appui sur toute la périphérie de la parclose (12) pour comprimer les deux joints de vitrage (9 et 11) et parfaire leur collage (si joint collé) ou leur écrasement régulier (si joint synthétique déformable).

11 - Installation selon la revendication 1, caractérisée en ce que tous les postes de travail comportent une table élévatrice (22) de mise à niveau par vérins.

12 - Installation selon la revendication 1, caractérisée en ce que chaque poste de travail comporte un convoyeur situé dans l'alignement du convoyeur du poste contigu, et des organes de transbordement tels que des rouleaux fous assurant le passage des vantaux d'un poste à un autre sans transition.

13 - Installation selon la revendication 2, caractérisée en ce que dans le cas où le joint de bord de vitrage est en matière synthétique nécessitant une polymérisation et un séchage, une unité de stockage des vantaux est située à la sortie du poste de pose du joint de fond de vitrage.

14 - Installation selon la revendication 2, caractérisée en ce qu'elle comporte un poste supplémentaire de pose de joint de parclose.

15 - Installation selon la revendication 1, caractérisée en ce qu'elle comporte des moyens de pose de jet d'eau (13) entre la section du vantail nu et la parclose (12).

FIG.1A

FIG.1B

FIG.1C

FIG.1D

FIG.1E

FIG.1F

FIG.2

FIG.3

EP 0 373 991 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 022 664  (RIVERS MACHINERY LTD) * Page 1, lignes 11-27,122-129; page 2, lignes 74-95; page 3, lignes 24-58; figures 2,3,7 * | 1,2,10 | E 06 B    3/06 |
| A | FR-A-2 212 479  (WILH. FRANK) * Page 2, lignes 14-21; page 3, lignes 3-5; page 3, ligne 18 - page 4, ligne 2; page 5, lignes 14-32; page 6, lignes 35-38; page 8, lignes 9-25; figures 1,2 * | 1,4,11 | |
| A | FR-A-2 534 621  (ETABLISSEMENTS BROUSSOT) * Page 1, ligne 38 - page 2, ligne 26; page 3, ligne 24 - page 4, ligne 7; page 4, lignes 17-24; figures 1,2 * | 1,10 | |
| A | CH-A-  432 860  (JÄGER-FRANK KG) * Colonne 1, ligne 28 - colonne 2, ligne 6; colonne 3, lignes 3-24; colonne 5, lignes 7-18; figure 2 * | 1 | |
| A | DE-A-2 345 881  (H. ROTTNER KG) | | |

**DOMAINES TECHNIQUES RECHERCHES (Int. Cl.5)**

E 06 B
E 04 F
B 23 P

Le présent rapport a été établi pour toutes les revendications

| Lieu de la recherche | Date d'achèvement de la recherche | Examinateur |
|---|---|---|
| LA HAYE | 20-03-1990 | VERVEER D. |